# EUROPEAN PATENT SPECIFICATION

(11) **EP 3 747 565 B1**
(45) Date of publication and mention of the grant of the patent: **30.08.2023**
(21) Application number: 18903060.4
(22) Date of filing: 27.12.2018
(51) Int. Cl.: B21D 5/02, B21D 37/14, G05B 19/409, G05B 19/4093, B21D 5/04, B21D 5/00

(54) **PRESS BRAKE CONTROL DEVICE, PRESS BRAKE CONTROL METHOD, TOOL MANAGEMENT METHOD, AND DATA STRUCTURE FOR DIE MANAGEMENT DATA**
BIEGEPRESSENSTEUERUNGSVORRICHTUNG, BIEGEPRESSENSTEUERUNGSVERFAHREN, WERKZEUGSVERWALTUNGSVERFAHREN UND DATENSTRUKTUR FÜR DIE DATENVERWALTUNG
DISPOSITIF DE COMMANDE DE PRESSE PLIEUSE, PROCÉDÉ DE COMMANDE DE PRESSE PLIEUSE, PROCÉDÉ DE GESTION D'OUTILS, ET STRUCTURE DE DONNÉES POUR DES DONNÉES DE GESTION DE MATRICES

(30) Priority: 31.01.2018 JP 2018015183
(43) Date of publication of application: 09.12.2020
(73) Proprietor: AMADA CO., LTD., Kanagawa 259-1196 (JP)
(72) Inventor: KENMOTSU, Hideki, Isehara-shi, Kanagawa 259-1196 (JP)
(74) Representative: Grünecker Patent- und Rechtsanwälte PartG mbB
(86) International application number: PCT/JP2018/048007
(87) International publication number: WO 2019/150867

(56) References cited:
- EP-A1- 2 868 401
- JP-A- 2007 098 561
- JP-A- 2014 024 118
- US-A- 6 163 734
- US-A1- 2007 124 017

## Description

### [TECHNICAL FIELD]

The present disclosure relates to a press brake control device and a press brake control method

### [BACKGROUND ART]

A press brake for bending a sheet metal includes an upper table to which a punch is mounted and a lower table to which a die is mounted. The press brake moves the upper table downward to the lower table and clamps and bends the sheet metal arranged on the die with the punch and the die.

A control device for controlling a press brake selects tools (punch and die) used for bending a sheet metal and generates tool layout data for setting a position in which the selected tools are mounted to the upper table and the lower table. An operator retrieves the tool set in the tool layout data from a tool stocker and mounts the tools to the position set in the tool layout data.

European patent application EP 2 868 401 A1 relate to a tool position detection device that detects a position of a tool attached onto a tool attachment unit such as a tool holder, to a bending device that bends a metallic plate material by using tools, to a tool for use in the bending device, and to a position detection method of an attachment member with respect to an attachment target device, the position detection method detecting a position of an attachment member (for example, a tool) attached onto an attachment target device (for example, a tool attachment unit). This state of the art discloses all features in the preamble of claim 1 and claim 2.

### [Citation List]

### [Patent Literature]

[Patent Literature 1]: Japanese Patent No. 6131095
[Patent Literature 2]: Japanese Unexamined Patent Application Publication No. 9-155452

### [SUMMARY OF THE INVENTION]

Breakage of a tool or a processing defect of a sheet metal may occur in a case where an operator mounts a tool which is different from the tool set in the tool layout data to the upper table or the lower table. Therefore, Patent Literature 1 discloses adding, to each tool, identification information for identifying a tool, reading the identification information of the tool to be mounted to the press brake, and collating whether a tool matches the tool set in the tool layout data.

A tool stocker includes a plurality of accommodation shelfs to which tools are mounted. Each accommodation shelf includes tool mounting units of a plurality of rows aligned in a horizontal direction to which the tools are mounted. Each of the tool mounting units of each row can mount a plurality of tools to the accommodation shelfs in a front-back direction. The tool stocker houses many types of tools whose shapes or sizes vary depending on each punch and each die, and thus, an operator sometimes erroneously retrieves an incorrect tool from the tool stocker and mounts the incorrect tool to the press brake.

An object of the invention is to provide a press brake control device and a press brake control method which allows correctly retrieving the tool set in the tool layout data from the tool stocker, mounting the retrieved tool to the press brake, and reducing the occurrence of breakage of a tool or a processing defect of a sheet metal.

The object is achieved by a press brake control device as set forth in claim 1 and a press brake control method as set forth in claim 2.

In accordance with a press brake control device and a press brake control method according to an embodiment, it is possible to correctly retrieve a tool set in tool layout data from a tool stocker to mount the retrieved tool to a press brake and reduce the occurrence of breakage of a tool or a processing defect of a sheet metal.

### [BRIEF DESCRIPTION OF THE DRAWINGS]

FIG. 1 is a diagram illustrating an entire configuration of a press brake into which embodiments are implemented.
FIG. 2 is a block diagram illustrating an example of a functional internal configuration of an NC device of the press brake according to Fig. 1.
FIG. 3 is a perspective view illustrating a state in which a tool stocker arranged near the press brake does not house a tool.
FIG. 4 is a front view illustrating an example of a state in which a tool stocker houses tools.
FIG. 5 is a perspective view illustrating an example of a tool with a tool ID.
FIG. 6 is a diagram schematically illustrating an example of tool management data stored in a tool management server.
FIG. 7 is a diagram illustrating an example of a tool layout image displayed on a display based on tool layout data.
FIG. 8 is a diagram schematically illustrating a state in which an operator touches a punch image of a tool layout image.
FIG. 9 is a diagram schematically illustrating possess tool information and tool-to-be-used information displayed when an operator touches a modification button.
FIG. 10 is a diagram illustrating an example of a tool layout image displayed on a display based on tool layout data generated such that tools are mounted to a plurality of positions of each of the upper table and the lower table.
FIG. 11 is a diagram schematically illustrating a state in which an operator touches a tool attachment button.
FIG. 12 is a diagram schematically illustrating a housing place display image displayed in a case where an operator touches a tool attachment button.
FIG. 13 is a diagram schematically illustrating a front-to-back position display image displayed when an operator touches a row number of an accommodation shelf in which a tool is housed.
FIG. 14A is a diagram illustrating an example of an instruction message displayed when, as a result of the collation, it is determined that a too is a correct tool.
FIG. 14B is a diagram illustrating an example of an alert message displayed when, as a result of the collation, it is determined that a tool is an incorrect tool.
FIG. 14C is a diagram illustrating an example of a confirmation message displayed when, as a result of the tool collation, it is determined that although a tool is a correct tool, it has a different tool ID.
FIG. 15A is a diagram illustrating an example of an instruction message indicating shifting to mounting of a die.
FIG. 15B is a diagram illustrating an example of an instruction message instructing the selection of any one of shifting to mounting of a die, shifting to mounting of a tool positioned in a left side, and shifting to mounting of a tool positioned in a right side.
FIG. 16 is a diagram illustrating an example of an alert message displayed when an instruction to shift a mode to a processing mode is received in a state in which the collation of a tool is not completed.
FIG. 17A is a flowchart showing partial processes included in a series of processes in a setup mode and a processing mode set by an NC device.
FIG. 17B is a flowchart showing partial processes by the NC device following the partial processes in FIG. 17A.

### [MODES FOR CARRYING OUT THE INVENTION]

A press brake control device, a press brake control method, a tool management method, and a data structure of pieces of tool management data are described below with reference to the accompanying drawings.

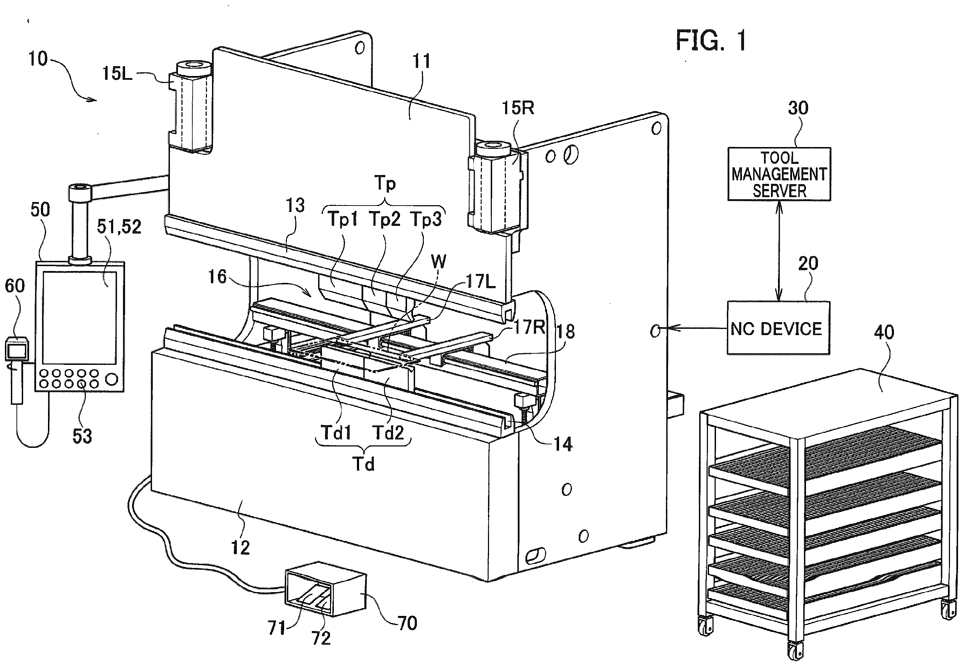

As illustrated in FIG. 1, an NC device 20 functioning as a press brake control device according to an embodiment is connected to a press brake 10. A tool management server 30 is connected to the NC device 20. The tool management server 30 may be installed in a place away from the NC device 20 via the network. A tool stocker 40 is arranged near the press brake 10. A plurality of the tool stockers 40 may be arranged.

The press brake 10 includes an upper table 11 and a lower table 12. An upper tool holder 13 is attached to the upper table 11 and a lower tool holder 14 is attached to the lower table 12. The upper table 11 is configured to move vertically via horizontally provided hydraulic cylinders 15L and 15R.

Three punches Tp that are the punch Tp1 to Tp3 are mounted to the upper tool holder 13 and two dies Td that are dies Td1 and Td2 are mounted to the lower tool holder 14. Types and the number of the punches Tp and the dies Td illustrated in FIG. 1 and positions how the punches Tp and the dies Td are mounted to the upper tool holder 13 and the lower tool holder 14 respectively are merely an example.

Although FIG. 1 illustrates a modular type in which the upper tool holder 13 is integrally attached over an entire length of a lower end of the upper table 11, the type may be an intermediate plate type in which a plurality of intermediate plates for mounting the punches Tp are attached to the lower end of the upper table 11 in a longitudinal direction. The intermediate plate is also the upper tool holder.

Mounting the punches Tp to the upper table 11 means mounting the punches Tp to the upper tool holder 13 or an intermediate plate. Mounting the dies Td to the lower table 12 means mounting the dies Td to the lower tool holder 14.

A back gauge 16 is provided in a rear direction of the upper table 11 and the lower table 12. The back gauge 16 includes abutment members 17L and 17R that horizontally move along a stretch 18. The abutment members 17L and 17R are configured to move also in a height direction and a vertical direction.

The abutment members 17L and 17R move to positions corresponding to the dies Td before an operator arranges a sheet metal W on the dies Td to bend the sheet metal W. The operator arranges the sheet metal W on the dies Td such that a back side end portion of the sheet metal W abuts to the abutment members 17L and 17R. That is, the abutment members 17L and 17R function to determine a position of the sheet metal W in a vertical direction when arranging the sheet metal W on the dies Td.

Further, as described later, the abutment members 17L and 17R are configured to move in a horizontal direction or a vertical direction to guide positions in which the punches Tp and the dies Td are mounted to the upper tool holder 13 and the lower tool holder 14 respectively.

Connected to the NC device 20 is an operation pendant 50 that includes a display 51, a touch panel 52 mounted on a surface side of the display 51, and an operation unit 53 with a plurality of operation buttons. The touch panel 52 also functions as an operation unit. An input via manipulating the touch panel 52 or the operation unit 53 is supplied to the NC device 20.

Connected to the operation pendant 50 is a two-dimensional code reader 60 described later that is a reader for reading a two-dimensional code included in the punches Tp and the dies Td. The two-dimensional code represents a tool ID (too identification information) for identifying each tool. In a case where a bar code is used instead of the two-dimensional code, a bar code reader may be connected to the operation pendant 50. In a case where an IC tag (an RF tag) is used instead of the two-dimensional code, a reader for reading the IC tag may be connected to the operation pendant 50.

Connected to the NC device 20 is a foot switch 70 including a closing foot switch 71 that causes the upper table 11 to move downward and an opening foot switch 72 that causes the upper table 11 to move upward.

In the press brake 10 configured as above, the operator arranges the sheet metal W to be processed on the dies Td as illustrated in FIG. 1. If an operator steps on the closing foot switch 71 to move the upper table 11 downward while the press brake 10 is in a processing mode, the sheet metal W is clamped between the punches Tp and dies Td to be bent. Alternatively, if the operator steps on the opening foot switch 72, the upper table 11 can be moved upward.

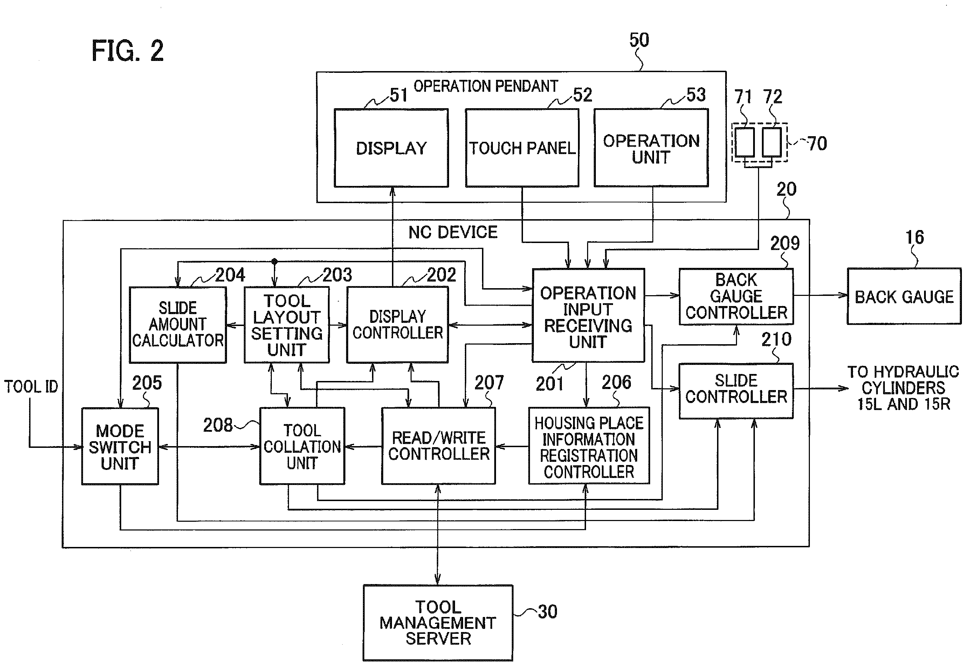

Examples of functional configurations in the NC device 20 are described with reference to FIG. 2. The NC device 20 includes an operation input receiving unit 201, a display controller 202, a tool layout setting unit 203, a slide amount calculator 204, a mode switch unit 205, a housing place information registration controller 206, a read/write controller 207, a tool collation unit 208, a back gauge controller 209, and a slide controller 210. The operation input receiving unit 201 to the slide controller 210 are implemented by a central processing unit in the NC device 20 executing software (computer program) stored in a non-transitory storage medium.

The operation input receiving unit 201 receives operations inputs from the touch panel 52, the operation unit 53, and the foot switch 70. An operation input receiving unit for receiving an operation input from the touch panel 52, an operation input receiving unit for receiving an operation input from the operation unit 53, and an operation input receiving unit for receiving an operation input from the foot switch 70 may be configured separately. The display controller 202 controls the display 51 to display various pieces of information.

Information on an image, a character, or the like displayed on the display 51 may sometimes correspond to an operation button manipulated via the touch panel 52 by using software. The display controller 202 supplies to, the operation input receiving unit 201, information indicating which parts of the information displayed on the display 51 is an operation button, and therefore, the operation input receiving unit 201 can receive an input through pressing an operation button of the touch panel 52.

After receiving material information indicating a material, a thickness, a bending length, and the like of the sheet metal W to be processed via the touch panel 52 (or the operation unit 53), the tool layout setting unit 203 automatically sets tools used for bending the sheet metal W to be processed by using the press brake 10, and generates tool layout data. The length at which the sheet metal W is bent is the width in the right-left direction of a portion where the sheet metal W is bent when viewed from the front of the press brake 10. As described later, the tool layout setting unit 203 selects tools used for bending the sheet metal W, which tools are included in a plurality of tools that are housed in the tool stocker 40 and registered in the tool management server 30 and generates the tool layout data.

After an operator manipulates the touch panel 52 (or the operation unit 53) to modify a tool to be used, the tool layout setting unit 203 modifies the tool to be used. As described later, the modification of the tool to be used includes the change of positions of tools when a plurality of tools are used and the change of the tool to be used itself. After the operator modifies the tool to be used, the tool layout setting unit 203 modifies the tool layout data. Based on the tool layout data, the display controller 202 controls the display 51 to display tool layout image.

Although, in an embodiment, the tool layout setting unit 203 of the NC device 20 automatically generates the tool layout data in response to the sheet metal W to be processed, tool layout data may be prepared as follows. As an example of an external device, a computer device functioning as a CAM may generate the tool layout data, and then, the NC device 20 may read the tool layout data. The operator may manually generate the tool layout data by using the NC device 20.

Based on any configurations or methods, tool management data may be referred to, a pair of tools used for bending the sheet metal W to be processed may be selected, positions may be set in which the pair of tools are mounted on the upper tool holder 13 or the lower tool holder 14 of the press brake 10 in a horizontal direction, and mounting position information indicating a mounting position may be generated. Based on any configurations or methods, the tool layout data may be generated in advance which includes the tool ID of the pair of tools, the mounting position information, and the housing place information of the pair of tools.

Based on a material and a thickness of the sheet metal W, information on the tool to be used and the like, the slide amount calculator 204 calculates the slide amount for moving the upper table 11 downward. The slide amount calculator 204 may calculate the slide amount by considering other various types of information to calculate the slide amount more precisely. Details of the slide amount will be described later.

The mode switch unit 205 sets a mode of the NC device 20 (the press brake 10) to any one of a plurality of modes in response to the manipulation of the touch panel 52 (or the operation unit 53). The plurality of modes includes: a registration mode in which a place where a tool is housed in the tool stocker 40 is registered, a processing data creation mode in which the tool layout data is generated and the slide amount is calculated, a setup mode in which an operator is instructed to attach a tool, and a processing mode in which the sheet metal W is processed.

If the mode switch unit 205 sets a mode of the NC device 20 to the registration mode in response to a manipulation of the touch panel 52 in a predetermined way, the housing place information registration controller 206 makes a control to register, in the tool management server 30, a place where a tool is housed in the tool stocker 40. Each time an operator purchases a new tool, a place where the new tool is housed is registered in the tool management server 30. A specific registration method of a place where a tool is housed will be described later.

The read/write controller 207 makes a control to write a place where a tool is housed in the tool management server 30 and reads out, from the tool management server 30, information on a tool registered in the tool management server 30.

In response to the manipulation of the touch panel 52 in a predetermined way, if the mode switch unit 205 sets a mode of the NC device 20 to the setup mode, the tool collation unit 208 collates a tool to be attached to the press brake 10 by an operator with a tool set in the tool layout data. Details of the collation of a tool will be described later.

The back gauge controller 209 controls the back gauge 16 to move the abutment members 17L and 17R to predetermined positions. The slide controller 210 controls the hydraulic cylinders 15L and 15R to control moving up/down of the upper table 11.

Described below are structures of the tool stocker 40, how to register a place where a tool is housed in the tool management server 30, and how the tool management server 30 manages a tool housed in the tool stocker 40.

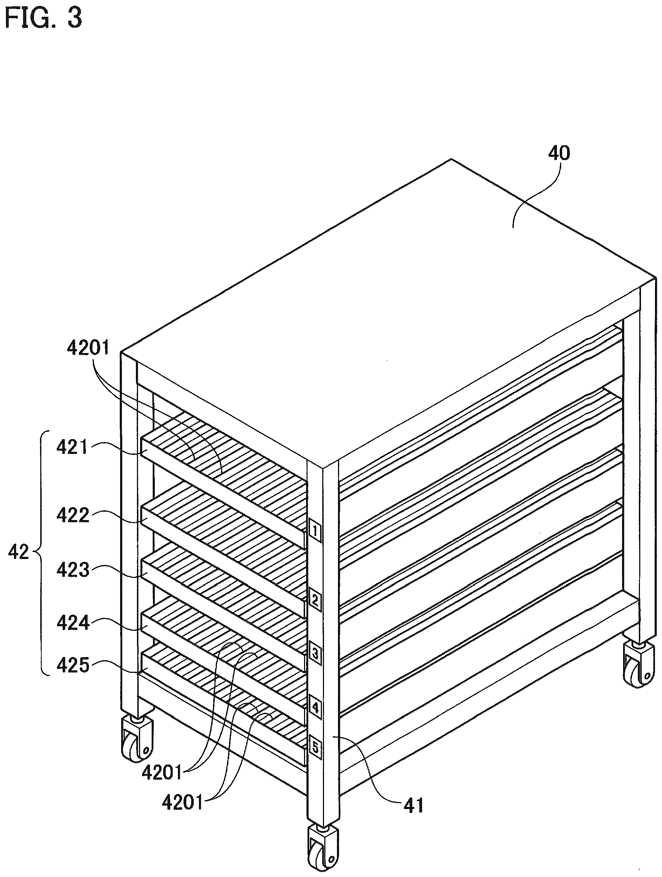

As illustrated in FIG.3, the tool stocker 40 includes a frame 41 and accommodation shelfs 421 to 425 mounted to the frame 41. The accommodation shelfs 421 to 425 are collectively referred to as accommodation shelfs 42. The accommodation shelfs 42 accommodate a plurality of tools. A number indicating the number of stages of the accommodation shelfs 42 is denoted to a position of the frame 41 corresponding to each of the accommodation shelfs 42. The accommodation shelfs 42 can be drawn from the frame 41. The number of the accommodation shelfs 42 is not limited to five, but the number is optional and may be one or more.

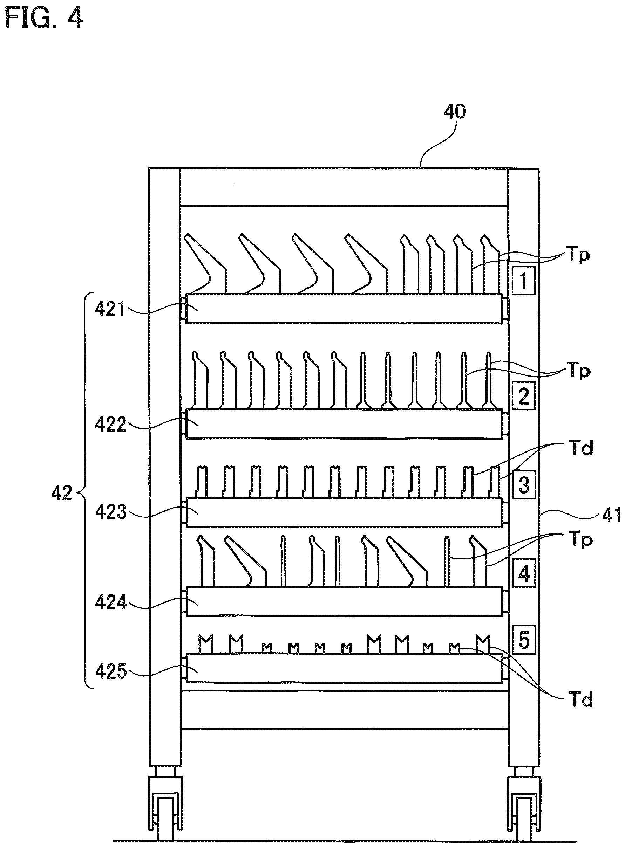

Formed on an upper surface of each of the accommodation shelfs 42 is a plurality of tool mounting units 4201 that are aligned in a row in a horizontal direction and include recesses to which tools are mounted. In an embodiment, the tool mounting units 4201 are aligned in 12 rows. As illustrated in a front view of FIG. 4, the punches Tp or the dies Td are mounted and accommodated in each of the accommodation shelfs 42. A single accommodation unit may accommodate the punches Tp only or the dies Td only instead of accommodating both the punches Tp and the dies Td in a mixed manner. As described later, FIG. 4 illustrates a state after registering a place where a tool is housed to the tool management server 30.

Each tool mounting unit 4201 extends from a front end portion to a back end portion of the accommodation shelfs 421 to 425, and thus, a plurality of tools can be mounted to the accommodation shelfs 421 to 425 in a front-back direction. Each tool mounting unit 4201 is formed with grooves into which partition plates are inserted at a predetermined distance interval. In a case where the plurality of tools are mounted to the tool mounting units 4201 in a front-back direction, a partition plate partitions between two adjacent tools.

After setting a mode of the NC device 20 to the registration mode, the operator houses a tool in the tool stocker 40 and registers a place where a tool is housed in the tool management server 30 as follows. First, the operator manipulates the touch panel 52 to instruct, to the NC device 20, a place where a tool is housed in the tool stocker 40 to be registered. As an example, the operator instructs a place where a tool is housed in a way that the number of the tool stocker 40 is "1," the number of steps of the accommodation shelfs 42 is "1," the number of rows among 12 rows is "1," and the number in a front-back direction is "1."

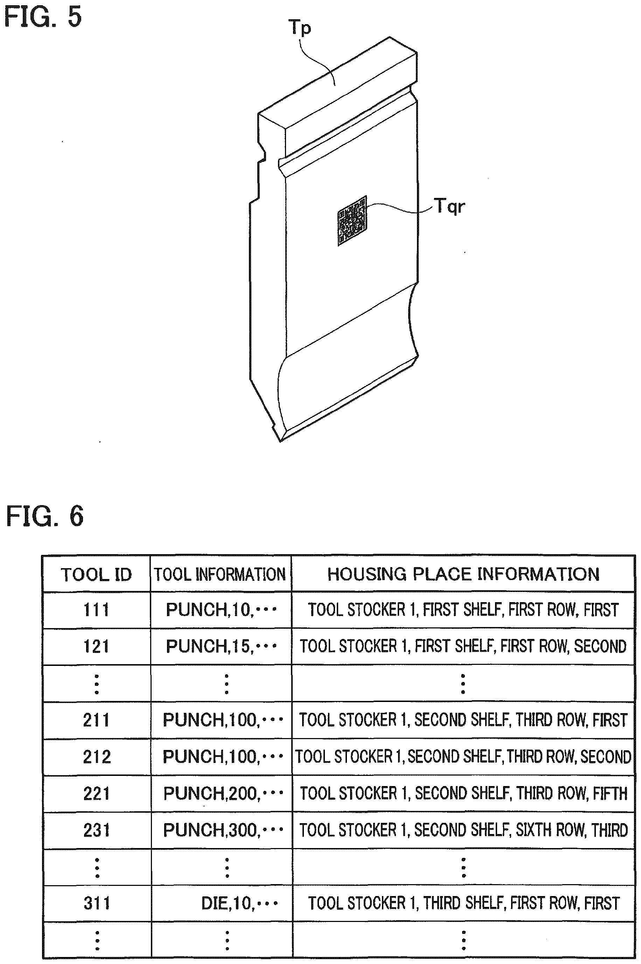

As illustrated in FIG. 5, to each tool, a two-dimensional code Tqr representing the tool ID is provided by means of laser engraving, for example. FIG. 5 exemplifies punches Tp formed with the two-dimensional code Tqr. The operator causes the two-dimensional code reader 60 to read the two-dimensional code Tqr of the tool whose housing place has been instructed as described above. After the two-dimensional code reader 60 reads the two-dimensional code Tqr, a place where a tool is housed in the tool stocker 40 may be instructed to the NC device 20.

In a case where a place where a tool is housed in the tool stocker 40 is instructed, the housing place information registration controller 206 registers, in the tool management server 30, the tool ID and a place where a tool is housed in association with each other. The tool management server 30 stores in advance the tool ID and tool information on a tool type that indicates at least the differentiation between the punches Tp and the dies Td and a tool width in association with each other. The tool information may further include information on a height of a tool, a point angle of the punches Tp, a V groove angle of the dies Td and the like. A tool width may be sometimes called a tool length because it corresponds to a bending length of the sheet metal W.

As illustrated in FIG. 6, the tool management server 30 manages each tool by storing tool management data obtained by associating the tool ID with the tool information and the housing place information. In FIG. 6, for the simplification, the tool ID is represented by a 3-figure number, but the actual number of figure is larger and alphabets may be included.

As described above, after registering a place where a tool is housed in the tool management server 30, the operator houses the registered tool in a registered place where a tool is housed in the tool stocker 40. The operator houses tools in the tool stocker 40 after registering places where all tools are housed in the tool management server 30, and thus, all tools housed in the tool stocker 40 are managed by the tool management server 30.

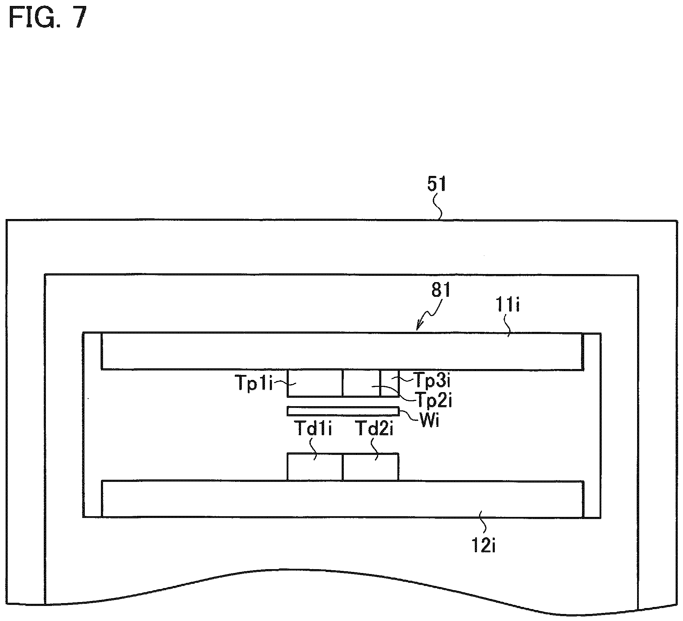

With reference to FIG. 7 to FIG. 10, processes of the NC device 20 are described in a case where the mode switch unit 205 sets a mode of the NC device 20 to a processing data creation mode via the manipulation of the touch panel 52 in a predetermined way. In a case where an operator instructs to generate new processing data via the manipulation of the touch panel 52 and material information of the sheet metal W is input, the tool layout setting unit 203 automatically generates the tool layout data. As illustrated in FIG. 7, the display controller 202 controls the display 51 to display the tool layout image 81 based on the tool layout data.

A tool layout image 81 includes an upper table image 11i, a lower table image 12i, and a sheet metal image Wi that respectively and schematically show the upper table 11, the lower table 12, and the sheet metal W to be processed. The tool layout setting unit 203 selects the punches Tp and the dies Td required to bend the sheet metal W to be processed from among tools that are housed in the tool stocker 40 and are managed by the tool management server 30.

Here, it is assumed that three punches Tp, that are the punch Tp1 to Tp3 and two dies Td, that are dies Td1 and Td2 are selected. The tool layout image 81 includes punch images Tp1i to Tp3i indicating the punch Tp1 to Tp3 and die images Td1i and Td2i indicating dies Td1 and Td2.

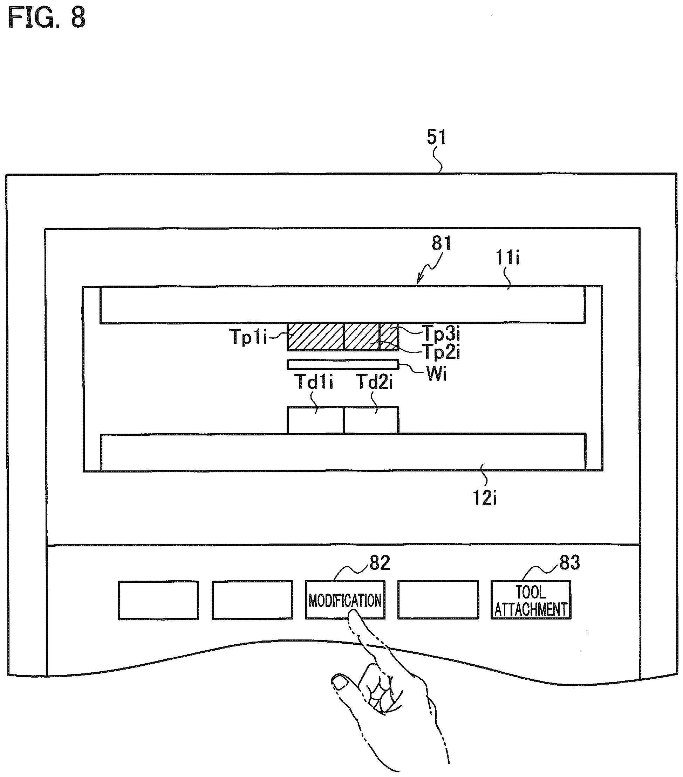

If an operator touches the punch images Tp1i to Tp3i, for example, as shown from the punch images Tp1i to Tp3i indicated with hatch lines in FIG. 8, the display controller 202 differentiates colors of the punch images Tp1i to Tp3i. Along with this, the display controller 202 displays a modification button 82 and a tool attachment button 83, or changes a state of a modification button 82 and a tool attachment button 83 from an inactive state to an active state. The touch of a modification button 82 by the operator allows modifying the tool layout data.

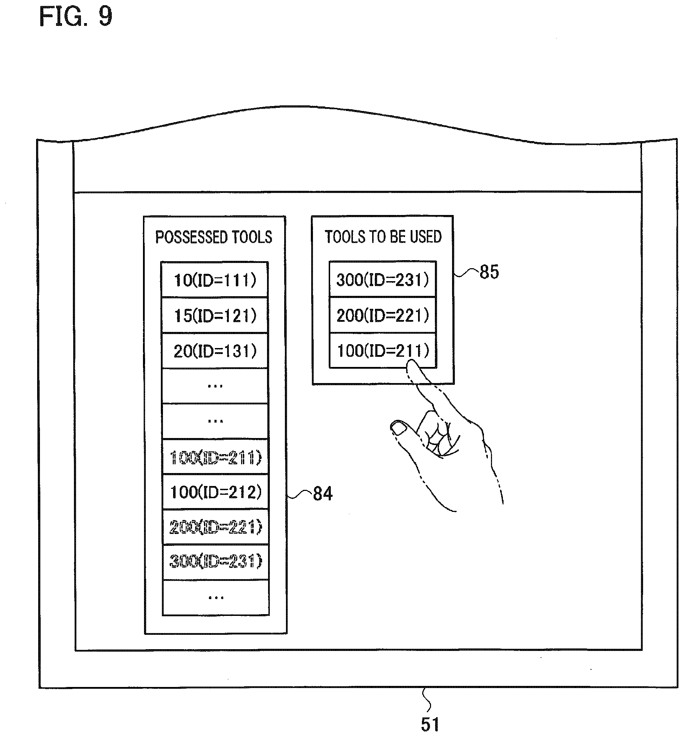

In a case where the operator touches the modification button 82, as illustrated in FIG. 9, the display controller 202 controls the display 51 to display possess tool information 84 indicating a list of tools housed in the tool stocker 40 and tool-to-be-used information 85 indicating the information on the tool to be used and an alignment order. In an embodiment, the punch images Tp1i to Tp3i are touched, and thus, the possess tool information 84 indicates a list of the punches Tp housed in the tool stocker 40, and the tool-to-be-used information 85 indicates the information on the punch Tp1 to Tp3 and the alignment order. Although, in FIG. 9, the punch Tp1 to Tp3 are displayed to be aligned in a vertical direction, but instead the punch Tp1 to Tp3 may be aligned in a horizontal direction as indicated in information of the punch Tp1 to Tp3 aligned in a horizontal direction.

The tool ID does not need to be displayed, although, as the possess tool information 84 and the tool-to-be-used information 85, the tool width and tool ID are displayed. The tool width and tool information other than the tool width may be displayed. Among tools displayed in the possess tool information 84, tools that are selected as the tools to be used and displayed in the tool-to-be-used information 85 are displayed in gray.

As illustrated in FIG. 9, an operator can change an alignment order by, with a finger, dragging and dropping a rectangular area in which information on a tool is displayed, which area is included in the tool-to-be-used information 85. A tool can be unselected by dragging and dropping a rectangular area in the tool-to-be-used information 85 to the possess tool information 84 and alternatively a tool can be newly selected by dragging and dropping a rectangular area displayed in the possess tool information 84 to the tool-to-be-used information 85.

As above, in a case where the operator changes an alignment order of tools or a tool to be used on the display 51, the tool layout setting unit 203 modifies the tool layout data. The data automatically set as described above or the tool layout data modified by the operator includes a tool ID of a tool used for bending the sheet metal W, the mounting position information for mounting a tool on the upper table 11 or the lower table 12, and information on a place where a tool is housed. The tool layout data may further include the tool information. The tool layout data is stored in the tool layout setting unit 203.

The slide amount calculator 204 calculates the slide amount of the upper table 11 based on the information on the sheet metal W and the tool layout data. Particularly, the slide amount calculator 204 calculates a pinching position in which tips of the punches Tp are in contact with the sheet metal W and a destination position of the tips of the punches Tp and also calculates a distance (stroke amount) in which the punches Tp move downward from the pinching position to the destination position. The slide amount calculator 204 calculates the stroke amount based on a thickness and a material of the sheet metal W, a height of a tool and the like.

The slide amount of the upper table 11 may correspond to a stroke amount, but may be preferably a depth value (D value) obtained by adding a correction distance to a stroke amount to bend the sheet metal W with high precision. The slide amount calculator 204 calculates the correction distance by considering the amount of spring back caused when the metal sheet W is bent in a V-shape, deflections of the upper table 11 and the lower table 12 to calculate the D value.

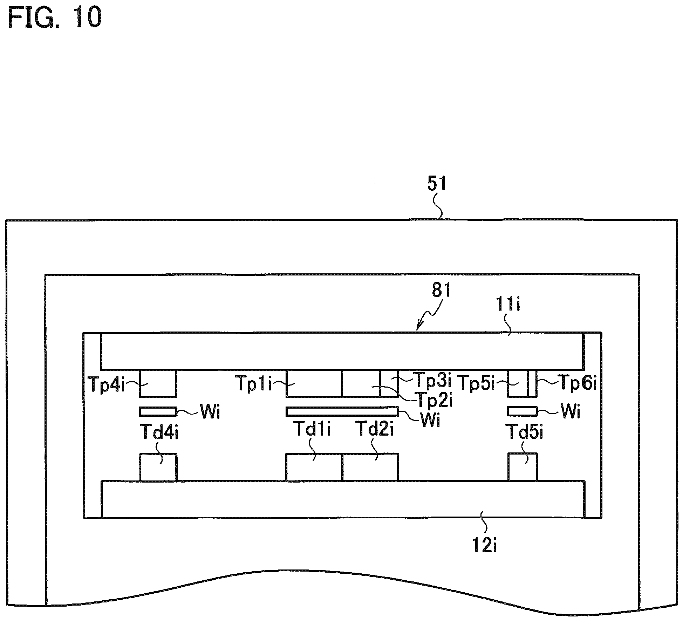

In examples illustrated in FIG. 7 and FIG. 8, the tool layout image 81 is illustrated in which a single tool is mounted on one position of each of the upper table 11 and the lower table 12. In the tool layout image 81 illustrated in FIG. 10, tools are mounted on a plurality of positions of each of the upper table 11 and the lower table 12, and the tool layout data may be generated in such way.

The tool layout setting unit 203 sets a tool layout such that a tool is automatically arranged at the center of the upper table 11 and the lower table 12. The tool layout data can be generated in which tools can be mounted to a plurality of positions by an operator manually shifting a tool image in the tool layout image 81 in a left direction or a right direction.

The tool layout image 81 illustrated in FIG. 10 shows an example in which either one of a pair of a punch image Tp4i and a die image Td4i and a pair of punch images Tp5i and Tp6i and a die image Td5i is firstly set, and the other pair is set next. A pair of the punch images Tp1i to Tp3i and the die images Td1i and Td2i are finally set and is arranged in the middle.

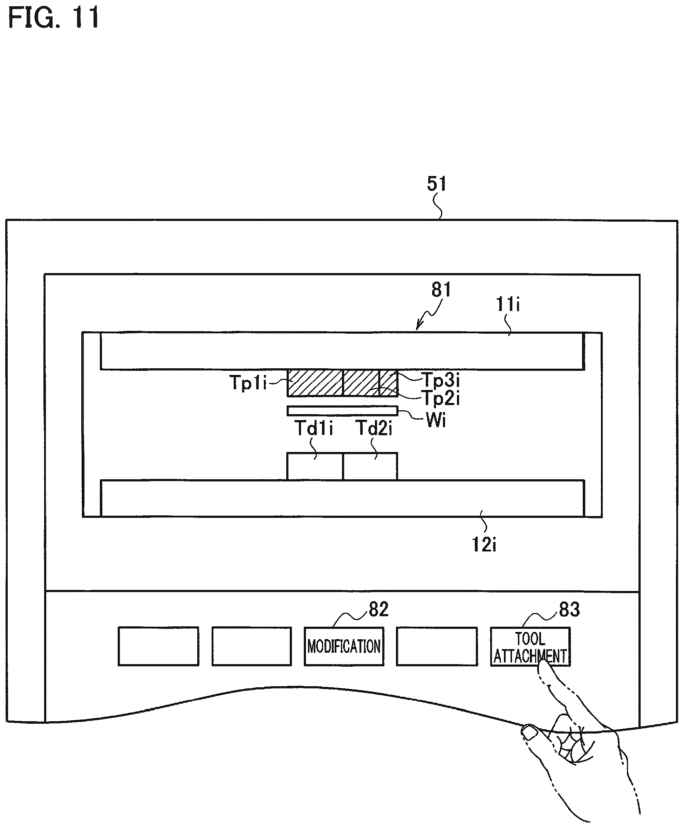

With reference to FIG. 11 to FIG. 13, FIG. 14A to FIG. 14C, FIG. 15A and FIG. 15B, processes of the NC device 20 are described in a case where the mode switch unit 205 sets a mode of the NC device 20 to the setup mode through the manipulation of the touch panel 52 in a predetermined way.

In FIG. 11, in a case where the operator touches the tool attachment button 83, a mode of the NC device 20 can be shifted to the setup mode. If a mode of the NC device 20 is shifted to the setup mode, the read/write controller 207 reads a place where a tool is housed information from the tool management server 30.

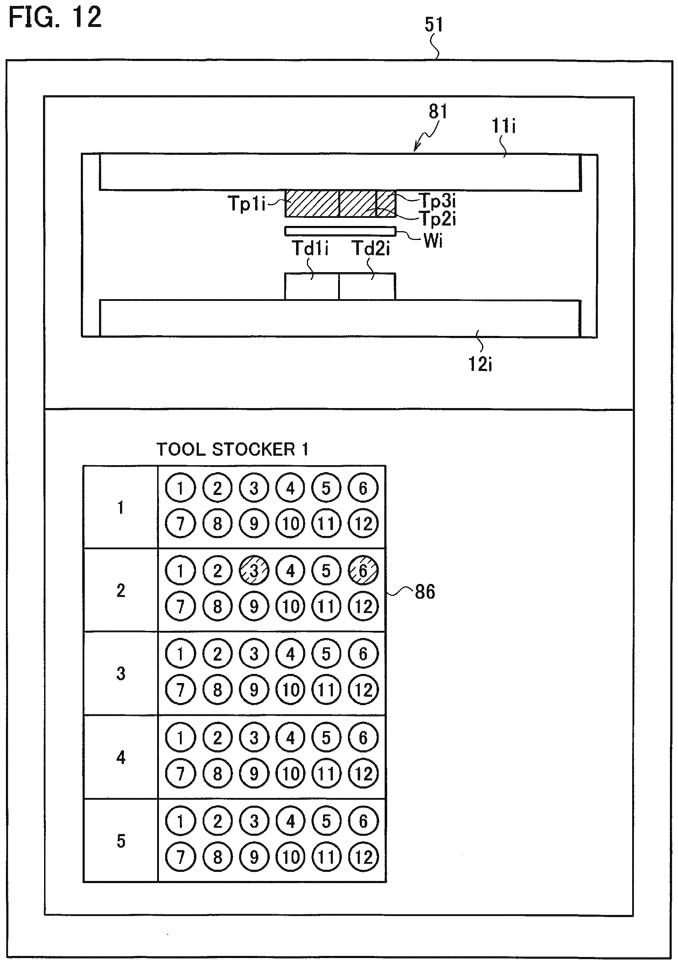

As illustrated in FIG. 12, based on the read place where a tool is housed information, the display controller 202 controls the display 51 to display a housing place display image 86 indicating a position in the tool stocker 40 in which the punch Tp1 to Tp3 are housed. As a sign number of a tool stocker, "the number 1" is denoted to the tool stocker 40, and thus, "tool stocker 1" is displayed above the housing place display image 86.

The housing place display image 86 illustrates a first shelf to a fifth shelf of the accommodation shelfs 42 of the tool stocker 40 in association with row numbers of the tool mounting units 4201 in each shelf. The punch Tp1 to Tp3 are mounted on a tool mounting unit 4201 in a third row and a tool mounting unit 4201 in a sixth row in a second shelf of the accommodation shelfs 42, that is the accommodation shelf 422. The display controller 202 differentiates a color of the numbers of rows, that are 3 and 6 in which the punch Tp1 to Tp3 are mounted to the tool mounting units 4201 from other row numbers.

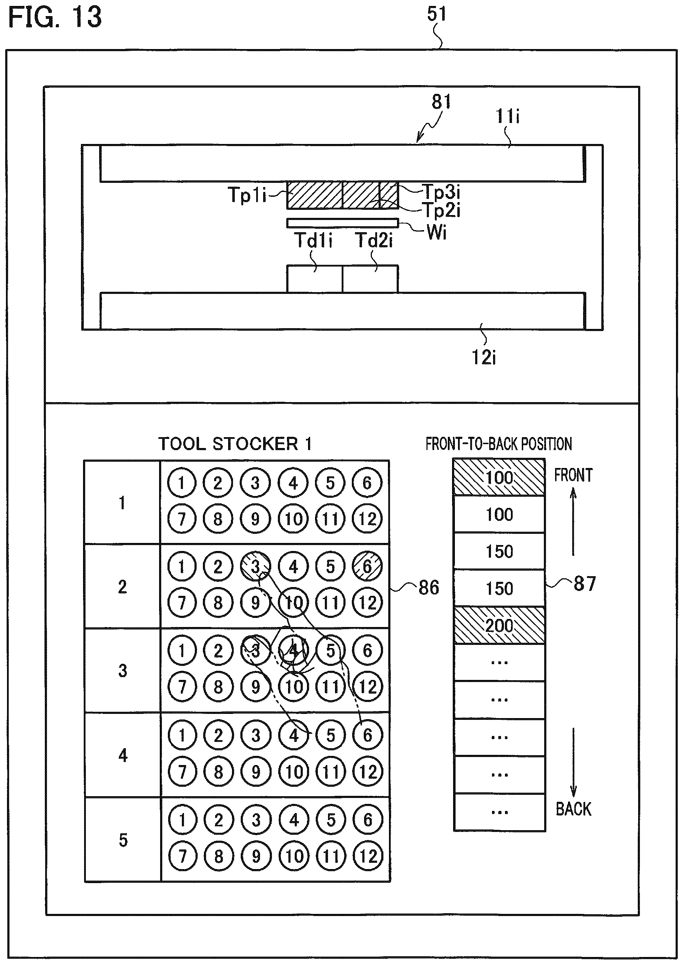

As illustrated in FIG. 13, in a case where an operator touches a row number 3 of the accommodation shelf 422, for example, the display controller 202 changes a color of the row number 3. In addition, based on the place where a tool is housed information, the display controller 202 controls the display 51 to display a front-to-back position display image 87 indicating a position where any punch Tp included in the punch Tp1 to Tp3 is housed in a front-to-back direction, which position is included in a tool mounting unit 4201 in a third row. An example of FIG. 12 illustrates that two punches Tp included in the punch Tp1 to Tp3 are housed in a first position and a fifth position in the front-to-back direction.

Although not illustrated, in a case where an operator touches a row number 6 in the accommodation shelf 422, the display controller 202 changes a color of the row number 6, and displays a front-to-back position display image 87 indicating to which position of a tool mounting unit 4201 in a sixth row in the front-to-back direction, the remaining one punch Tp is housed.

Based on the housing place display image 86 and the front-to-back position display image 87, an operator can recognize to which positions in the tool stocker 40, the punch Tp1 to Tp3 are housed. In an embodiment, places where tools are housed are divided into two and displayed in the housing place display image 86 and the front-to-back position display image 87, but how to display a place where a tool is housed is not limited. An integral image may be adopted which includes all of the information on the accommodation shelfs 42 in which tools are housed, information on a row number of the tool mounting unit 4201 in which tools are housed in the accommodation shelfs 42, and information on positions in a front-to-back direction.

The operator retrieves in any order the punch Tp1 to Tp3 from the place where the tool is housed in the tool stocker 40 indicated in the housing place display image 86 and the front-to-back position display image 87. An operator, first retrieves a punch Tp1 from the tool stocker 40, for example and reads the two-dimensional code Tqr of the punch Tp1 by using the two-dimensional code reader 60. In a case where a device is in the setup mode, the mode switch unit 205 supplies the tool ID represented by the read two-dimensional code Tqr to the tool collation unit 208.

The tool collation unit 208 collates the read tool ID with tool IDs of tools (here punches Tp) set in the tool layout data stored in the tool layout setting unit 203. As a result of the collation, if the read tool ID matches any of the tool IDs of the tool set in the tool layout data, the tool collation unit 208 notifies of the display controller 202 and the back gauge controller 209 the fact that the tool IDs are matched.

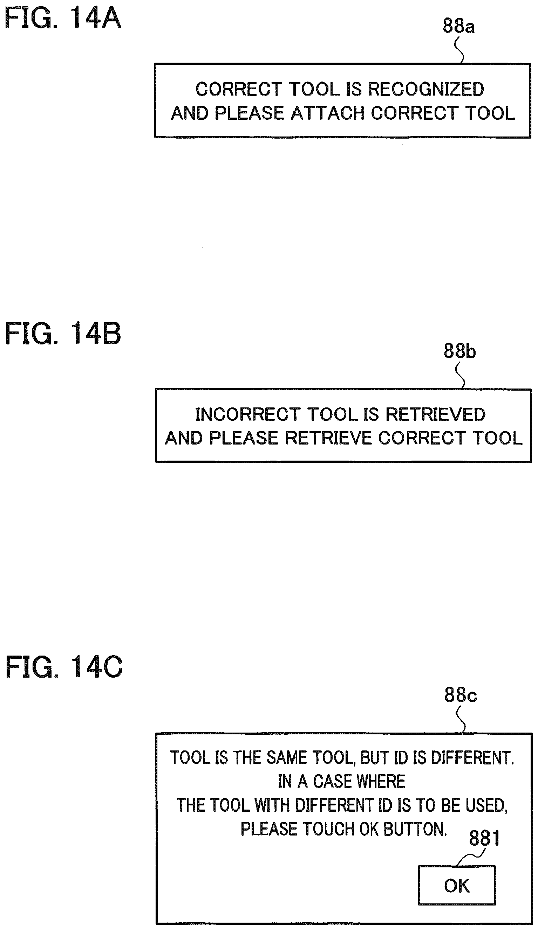

Then, as illustrated in FIG. 14A, after being notified that the tool IDs are matched, the display controller 202 controls the display 51 to display an instruction message 88a (first message) with a text representing that a correct tool is recognized and the correct tool is instructed to be attached to the press brake 10. Along with this, the back gauge controller 209 makes a control to move the abutment members 17L and 17R to a position corresponding to a position to which the retrieved punch Tp1 should be mounted. With reference to the positions of the abutment members 17L and 17R, the operator mounts the punch Tp1 to the upper tool holder 13.

It is assumed that an operator incorrectly retrieves a tool different from the tool set in the tool layout data and the two-dimensional code Tqr of the incorrect tool is read by the two-dimensional code reader 60. As a result of the collation by the tool collation unit 208, the read tool ID does not match any of the tool IDs of the tools set in the tool layout data, and thus, the tool collation unit 208 notifies of the display controller 202 and the back gauge controller 209 that the tool IDs are not matched.

After being notified that the tool IDs are not matched, as illustrated in FIG. 14B, the display controller 202 controls the display 51 to display an alert message 88b (second message) with a text representing a retrieval of an incorrect tool and an instruction to retrieve a correct tool. At this time, the back gauge controller 209 does not move the abutment members 17L and 17R. Based on the alert message 88b and the non-movement of the abutment members 17L and 17R, the operator can recognize that an incorrect tool is retrieved. Accordingly, it is possible to prevent almost certainly the attachment of the incorrect tool to the press brake 10 by the operator.

Similarly, the operator retrieves punches Tp2 and Tp3 in order from the tool stocker 40 and causes the two-dimensional code reader 60 to read the two-dimensional codes Tqr of the punches Tp2 and Tp3. After the display 51 displays the instruction message 88a and the abutment members 17L and 17R are moved, the operator mounts the punches Tp2 and Tp3 to the upper tool holder 13 in order. As described above, the punch Tp1 to Tp3 are retrieved and are mounted to the upper tool holder 13 in any order.

It is assumed that a punch Tp whose tool ID is 211 (Tp3) and a punch Tp whose tool ID is 212 illustrated in FIG. 6 are the same tools. Further, it is assumed that the tool set in the tool layout data is the punch Tp3 whose tool ID is 211 and an operator intentionally retrieves the punch Tp whose tool ID is 212, that is the same tool to read the two-dimensional code Tqr thereof. In this case, the display controller 202 cause the display 51 to display a confirmation message 88c (third message) illustrated in FIG. 14C and may cause the display 51 to display the alert message 88b illustrated in FIG. 14B.

As illustrated in FIG. 14C, after being notified that a tool is the same tool with a different tool ID, the display controller 202 controls the display 51 to display the confirmation message 88c which notifies a fact that a tool is the same tool with a different tool ID and asks a user whether to use the tool with different ID. In a case where an operator intentionally retrieves a tool different from the tool set in the tool layout data, the operator may touch an OK button 881 in the confirmation message 88c. The operation input receiving unit 201 notifies of the tool layout setting unit 203 the use of the punch Tp whose tool ID is 212.

The tool layout setting unit 203 instructs the read/write controller 207 to read the information on a place where the punch Tp whose tool ID is 212 retrieved by an operator is housed. The tool layout setting unit 203 replaces the punch Tp3 whose tool ID is 211 and housing place information thereof in the tool layout data with the punch Tp whose tool ID is 212 and information on the place where the punch Tp whose tool ID is 212 is housed read from the tool management server 30.

At the time when the confirmation message 88c is displayed, the back gauge controller 209 does not move the abutment members 17L and 17R. In a case where an OK button 881 is touched, the back gauge controller 209 moves the abutment members 17L and 17R to a position to which the punch Tp whose tool ID is 212 should be mounted. The position to which the punch Tp whose tool ID is 212 should be mounted is the same as the position to which the punch Tp3 whose tool ID is 211 should be mounted.

The tool collation unit 208 stores a correct tool whose collation is completed, that is a collated tool included in the tools set in the tool layout data as a collation completed tool. As an example, the tool collation unit 208 may add a collation completed flag to a tool ID of a correct tool whose collation is completed. The intentional change of a tool by an operator in FIG. 14C is included in the completion of the collation of a correct tool.

The tool collation unit 208 can determine whether the collation of all correct tools is completed both in pairs of the punches Tp mounted to the upper tool holder 13 and pairs of the dies Td mounted to the lower tool holder 14.

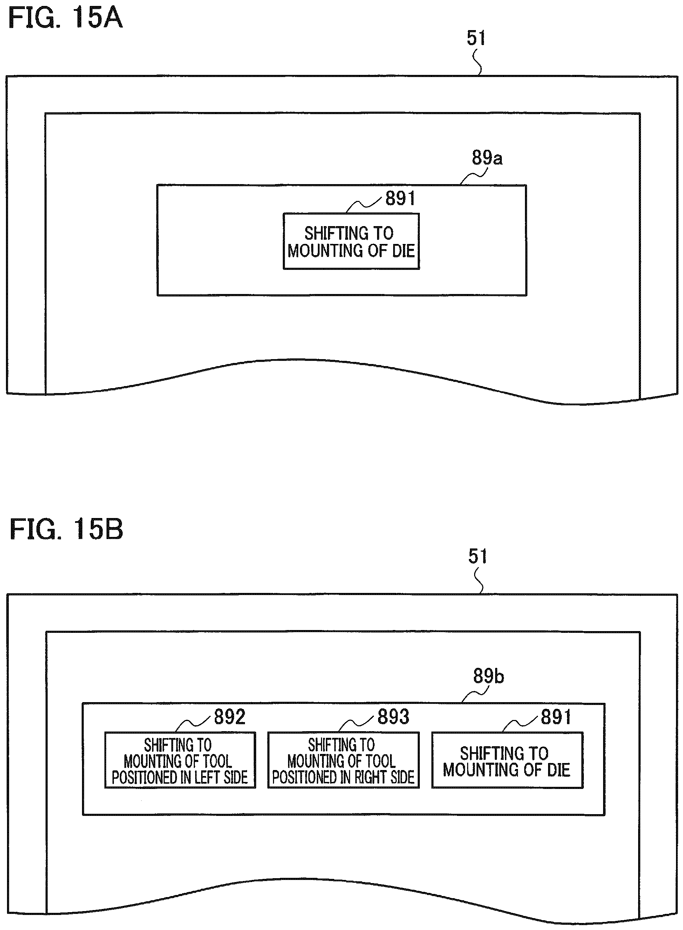

After the collation of all of the punch Tp1 to Tp3 is completed, as illustrated in FIG. 15A, the display controller 202 controls the display 51 to display an instruction message 89a indicating a shift to mounting of the dies Td. The instruction message 89a includes an instruction button 891 for shifting to mounting of the dies Td. In FIG. 8, in a case where an operator touches the instruction button 891, the display controller 202 returns a color of the punch images Tp1i to Tp3i to an original color and differentiates a color of the die images Td1i and Td2i.

In the setup mode, operations by an operator and processes of the NC device 20 when the dies Td1 and Td2 are mounted to the press brake 10 are the same as those when the punch Tp1 to Tp3 are mounted to the press brake 10.

Similarly, in a case where an operator touches the modification button 82, it is possible to modify the dies Td1 and Td2 set in the tool layout data. If an operator touches the tool attachment button 83, based on the housing place display image 86 and the front-to-back position display image 87, to which positions in the tool stocker 40, the dies Td1 and Td2 are housed can be recognized.

The operator retrieves in any order the dies Td1 and Td2 from the place where a tool is housed in the tool stocker 40 shown in the housing place display image 86 and the front-to-back position display image 87 and causes the two-dimensional code reader 60 to read the two-dimensional codes Tqr of the dies Td1 and Td2 in the order. As a result of the collation by the tool collation unit 208, in a case where the display 51 displays the instruction message 88a and the abutment members 17L and 17R are moved, an operator mounts the dies Td1 and Td2 to the lower tool holder 14 in the order.

In an embodiment, as illustrated in FIG. 8, the tool layout image 81 is exemplified in which a tool is mounted to only one position of each of the upper table 11 and the lower table 12. Therefore, in a case where the punches Tp are selected as tools to be firstly mounted, the NC device 20 shifts a process to the instruction of mounting of the dies Td. Alternatively, in a case where the dies Td are selected as tools to be firstly mounted, the display controller 202 controls the display 51 to display an instruction button for shifting to mounting of the punches Tp instead of the instruction button 891 illustrated in FIG. 15A.

In a case where the tool layout data is generated as shown in the tool layout image 81 illustrated in FIG. 10 in which tools are mounted to a plurality of positions of each of the upper table 11 and the lower table 12, the display controller 202 can cause the display 51 to display an instruction message 89b illustrated in FIG. 15B.

The instruction message 89b includes the instruction button 891 for shifting to mounting of the dies Td, an instruction button 892 for shifting to mounting of a tool mounted in the left side, and an instruction button 893 for shifting to mounting of a tool mounted in the right side. After all of the punches Tp are mounted to three positions of the upper table 11, an operator can shift a process to mounting of the dies Td to three positions of the lower table 12. After mounting of the punches Tp and the dies Td to each position is completed, an operator can shift a process to mounting of the punches Tp and the dies Td to other position.

In a case where an operator determines that mounting of all punches Tp and dies Td is completed, the operator presses a processing start button in the operation unit 53. After the processing start button is pressed, the operation input receiving unit 201 instructs the mode switch unit 205 to shifts a mode to a processing mode. The processing mode is a state mode in which the NC device 20 receives operations through the foot switch 70 and can actually bend the sheet metal W.

The mode switch unit 205 confirms whether the tool collation unit 208 has completed the collation of all punches Tp and dies Td. If the collation of all punches Tp and dies Td is not completed, the mode switch unit 205 does not supply, to the operation input receiving unit 201, a signal to allow the reception of operations through the foot switch 70 and does not shift a mode of the NC device 20 to the processing mode. At this time, the display controller 202 is instructed to display an alert message from the mode switch unit 205 via the tool collation unit 208 (or directly).

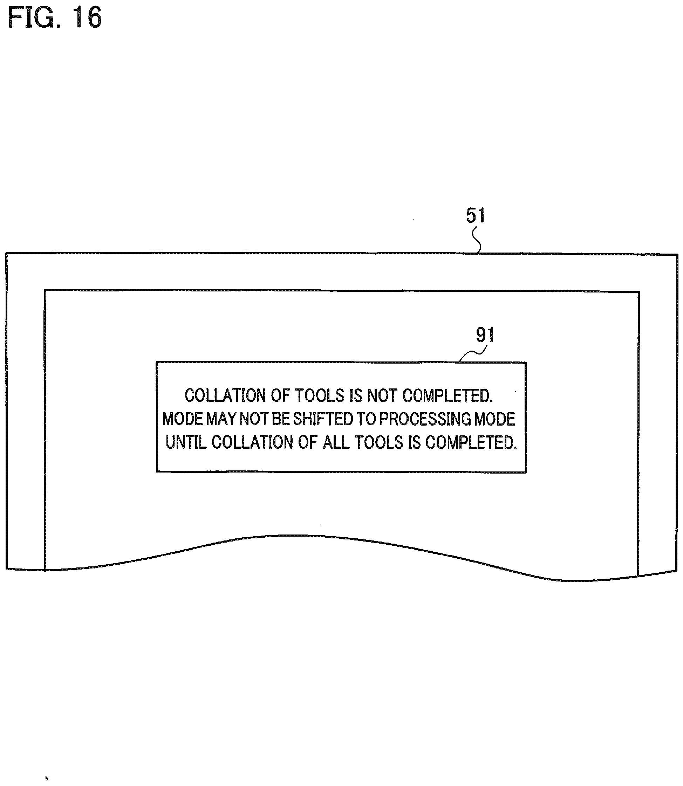

As illustrated in FIG. 16, the display controller 202 controls the display 51 to display an alert message 91 indicating that the collation of tools is not completed and a mode may not be shifted to the processing mode until the collation of all tools is completed. The alert message 91 may be deleted after the elapse of a predetermined time or the alert message 91 may be displayed to a position not overlapping with the instruction message 89a or 89b so that an operator who has checked the alert message 91 can touch the instruction button 891 (892 or 893).

On the other hand, if the collation of all punches Tp and dies Td has been completed, the mode switch unit 205 supplies, to the operation input receiving unit 201, a signal to allow the reception of operations through the foot switch 70 and shifts a mode of the NC device 20 to the processing mode. The operator can bend the sheet metal W by arranging the sheet metal W on the dies Td and moving the upper table 11 downward by stepping on a closing foot switch 71.

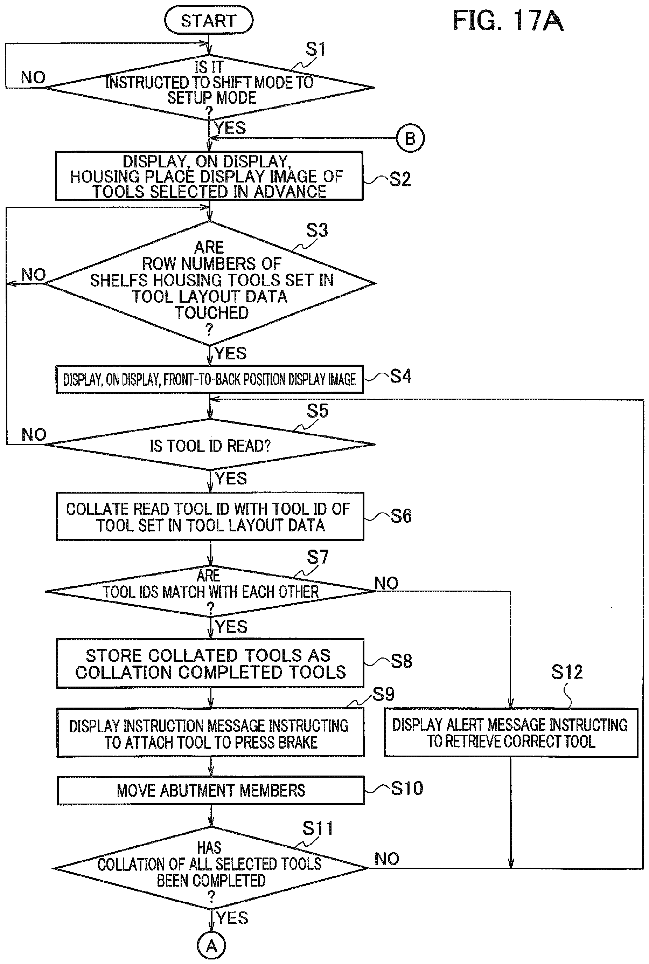

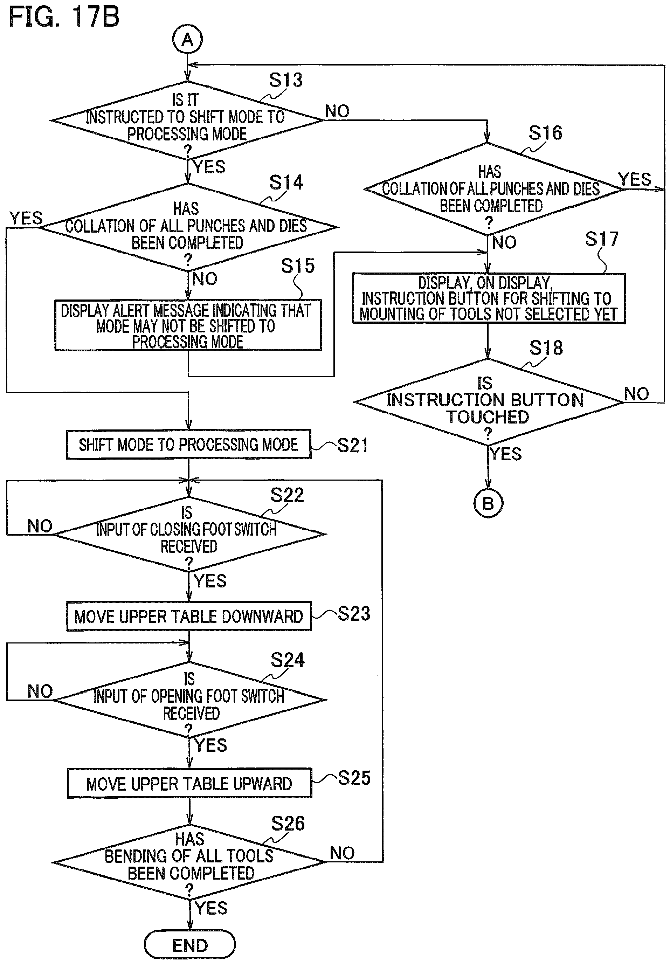

With reference to flowcharts shown in FIG. 17A and FIG. 17B, a series of processes of the NC device 20 in the setup mode and the processing mode described above is further described. In FIG. 17A, in step S1, the NC device 20 determines whether it is instructed to shift a mode to the setup mode. If it is not instructed to shift a mode to the setup mode (NO), the NC device 20 repeats a process of step S1. Alternatively, if it is instructed to shift a mode to the setup mode (YES), the NC device 20 shifts a mode of the press brake 10 to the setup mode in which processes in or after step S2 are performed.

In step S2, the NC device 20 displays on the display 51 the housing place display image 86 of one or more tools selected in advance from among the punches Tp and the dies Td. In step S3, the NC device 20 determines whether row numbers of the accommodation shelfs 42 housing tools set in the tool layout data are touched in the housing place display image 86.

If row numbers are not touched (NO), the NC device 20 repeats the processes of step S3. Alternatively, if row numbers are touched (YES), in step S4, the NC device 20 displays on the display 51 the front-to-back position display image 87. The operator can retrieve tools set in the tool layout data from the tool stocker 40 by referring to the housing place display image 86 and the front-to-back position display image 87. After retrieving the tools, the operator can read the two-dimensional code Tqr (tool ID) by using the two-dimensional code reader 60.

In step S5, the NC device 20 determines whether a tool ID is read. If the tool ID is not read (NO), the NC device 20 reruns a process to the process of step S3. Alternatively, if the tool ID is read (YES), in step S6, the NC device 20 collates the read tool ID with a tool ID of a tool set in the tool layout data.

In step S7, the NC device 20 determines whether the read tool ID matches a tool ID of any tool set in the tool layout data. If the tool IDs match (YES), in step S8, the NC device 20 stores a collated tool as a collation completed tool and in step S9, displays on the display 51 the instruction message 88a instructing to attach a tool to the press brake 10. In step S10, the NC device 20 moves the abutment members 17L and 17R. Processes of step S8 to S10 can be performed in any order and can be performed simultaneously.

In step S11, the NC device 20 determines whether the collation of all selected tools has been completed. If the collation has not been completed (NO), the NC device 20 returns a process to the process to step S5.

On the other hand, in step S7, if the tool IDs do not match (NO), in step S12, the NC device 20 displays on the display 51 the alert message 88b and then returns a process to the process of step S5.

In FIG. 17B, in step S13, the NC device 20 determines whether it is instructed to shift a mode to the processing mode by pressing the processing start button. If it is instructed to shift a mode to the processing mode (YES), in step S14, the NC device 20 determines whether the collation of all punches Tp and dies Td has been completed. If the collation of all punches Tp and dies Td is not completed (NO), in step S15, the NC device 20 displays on the display 51 the alert message 91 and then shifts a process to the process of step S17.

In step S13, if it is not instructed to shift a mode to the processing mode (NO), in step S16, the NC device 20 determines whether the collation of all punches Tp and dies Td is completed. If the collation of all punches Tp and dies Td is not completed (NO), in step S17, the NC device 20 displays, on the display 51, an instruction button 891 (or 891 to 893) for shifting to the mounting of tools not selected yet. Alternatively, if the collation of all punches Tp and dies Td is completed (YES), the NC device 20 returns a process to the process of step S13.

In step S18, the NC device 20 determines whether the instruction button 891 (892 or 893) is touched. If the instruction button 891 (892 or 893) is not touched (NO), the NC device 20 returns a process to the process of step S13. Alternatively, if the instruction button 891 (892 or 893) is touched (YES), the NC device 20 returns a process to the process of step S2.

As shown in an example of FIG. 7, in a case of tool layout data in which a tool is mounted to only one position of each of the upper table 11 and the lower table 12, the collation of all punches Tp and dies Td is completed by repeating processes of steps S2 to S11 twice. As shown in an example of FIG. 10, in a case of tool layout data in which tools are mounted to three positions of each of the upper table 11 and the lower table 12, the collation of all punches Tp and dies Td is completed by repeating processes of steps S2 to S11 half-dozen times.

In a case where in step S13, it is instructed to shift a mode to the processing mode (YES) and in step S14, the collation of all punches Tp and dies Td is completed (YES), in step S21, the NC device 20 shifts a mode of the press brake 10 to the processing mode in which operations through the foot switch 70 are received.

In step S22, the NC device 20 determines whether an input of the closing foot switch 71 is received. If the input of the closing foot switch 71 is not received (NO), the NC device 20 repeats the process of step S22. Alternatively, if the input of the closing foot switch 71 is received (YES), in step S23, the NC device 20 moves the upper table 11 downward by the set slide amount.

In step S24, the NC device 20 determines whether an input of the opening foot switch 72 is received. If the input of the opening foot switch 72 is not received (NO), the NC device 20 repeats the process of step S224. Alternatively, if the input of the opening foot switch 72 is received (YES), in step S25, the NC device 20 moves up the upper table 11 to an upper end portion.

In step S26, the NC device 20 determines whether bending of all tools that are set in the tool layout data and mounted to all positions has been completed. If the bending of all tools is not completed (NO), the NC device 20 returns a process to the process of step S22. Alternatively, if the bending of all tools is completed (YES), the NC device 20 ends bending processes of the sheet metal W.

In the flowcharts shown in FIG. 17A and FIG. 17B, processes of displaying the alert message 91 in a case where it is instructed to shift a mode to the processing mode although the collation of all punches Tp and dies Td is not completed, that is, the steps S13 to S15 are performed after step S11. Similar processes may be performed after other steps.

As seen from the above, a data structure of the tool management data according to an embodiment is configured as follows. The data structure of the tool management data is stored in the tool management server 30 and is referred to by a control device for controlling the press brake 10 that is the NC device 20. The data structure includes a tool ID for identifying individually each tool included in a plurality of tools housed in the tool stocker 40, the tool information on a type and a width of each tool associated with a tool ID of each tool, and the housing place information indicating a place where each tool is housed in the tool stocker 40.

To bend the sheet metal W to be processed by using the press brake 10, the data structure is referred to by the NC device 20 for selecting the tools based on the tool information. The data structure is referred to generate the tool layout data that includes the mounting position information for mounting a selected tool to the upper tool holder 13 or the lower tool holder 14 of the press brake 10, a tool ID of a selected tool, and information on a place where a selected tool is housed.

The present invention is not limited to an embodiment described above, and various modifications are possible within a scope not departing from a scope of the present invention as defined in the appended claims. In configuring the press brake control device according to an embodiment, software and hardware can be used properly in any way. The present invention is not limited to a configuration of realizing functions of the NC device 20 illustrated in FIG. 2 by software.

## Claims

1. A press brake control device (20) comprising:
**(a)** a tool layout setting unit (203) configured,
• to refer to tool management data,
• to select a pair of tools (Tp, Td) including punches and dies mounted to at least one position in a horizontal direction of an upper table (11) and a lower table (12) of a press brake (10) that are tools (Tp, Td) used for bending a sheet metal to be processed,
• to set positions in which the pair of tools (Tp, Td) are mounted to the upper table (11) and the lower table (12) in the horizontal direction in an aligning manner, and
• to generate tool layout data that includes
- a tool ID of each tool (Tp, Td) of the pair of tools (Tp, Td) mounted to each position,
- mounting position information indicating a place in which each tool (Tp, Td) is mounted to the upper table (11) or the lower table (12), and
- housing place information of each tool (Tp, Td) in a tool stocker (40) that houses the pair of tools (Tp, Td) having the tool ID for individually identifying each tool (Tp, Td); and
**(b)** a display controller (202) configured to control a display (51) to display information indicating a place where the pair of tools (Tp, Td) are housed in the tool stocker (40) based on the housing place information included in the tool layout data;
**(c)** a tool collation unit configured to collate a read tool ID with a tool ID of the pair of tools (Tp, Td) included in the tool layout data and determines whether the read tool ID matches the tool ID of either one of the pair of tools (Tp, Td) when an operator refers to information indicating a housing place displayed on the display to retrieve a tool from the tool stocker (40) and a reader reads a tool ID of the retrieved tool, wherein
the tool management data obtained by associating the tool ID of each tool (Tp, Td) with tool information on a type and a width of each tool (Tp, Td) and the housing place information indicating the place where each tool (Tp, Td) is housed in the tool stocker (40) is stored in a tool management server (30),
the display controller (202) is further configured:
• to control the display to display a first message indicating that the tool retrieved by the operator is a correct tool in a case where the tool collation unit determines that the read tool ID matches the tool ID of either one of the pair of tools, and
• to control the display to display a second message indicating that the tool retrieved by the operator is an incorrect tool in a case where the tool collation unit determines that the read tool ID matches a tool ID of none of the pair of tools (Tp, Td),
**characterized in that**
the display controller (202) is further configured in a case where the tool collation unit (208) determines that the tool (Tp, Td) of the read tool ID and any punch (Tp) or any die (Td) are the same tools (Tp, Td) although IDs thereof are different, to allow the display controller (202) to control the display (51) to display a third message indicating that the tools (Tp, Td) are the same although IDs thereof are different, and
the press brake control device (20) is further configured, if an operator instructs use of the punch (Tp) or the die (Td) with the read tool ID, to allow the tool layout setting unit (203) to replace the tool ID and the housing place information of the punch (Tp) or the die (Td) of the same tool (Tp, Td) of the punch (Tp) or the die (Td) with the read tool ID included in the punch (Tp) or the die (Td) in the tool layout data with the tool ID and the housing place information of the punch (Tp) or the die (Td) with the read tool ID.

2. A press brake control method comprising:
housing, in a tool stocker (40), a pair of tools (Tp, Td) including punches and dies having a tool ID for individually identifying each tool (Tp, Td);
storing, in a tool management server (30), tool management data obtained by associating the tool ID of each tool (Tp, Td) with tool information on a type and a width of each tool (Tp, Td) and housing place information indicating the place where each tool (Tp, Td) is housed in the tool stocker (40);
referring to the tool management data, selecting the pair of tools (Tp, Td) mounted to at least one position in a horizontal direction of an upper table (11) and a lower table (12) of a press brake (10) that are tools (Tp, Td) used for bending a sheet metal to be processed,
setting positions in which the pair of tools (Tp, Td) are mounted to the upper table (11) and the lower table (12) in the horizontal direction in an aligning manner, and
generating tool layout data that includes the tool ID of each tool (Tp, Td) of the pair of tools (Tp, Td) mounted to each position, mounting position information indicating a position in which each tool (Tp, Td) is mounted to the upper table (11) or the lower table (12), and the housing place information of each tool (Tp, Td) in the tool stocker (40) that houses the pair of tools (Tp, Td) having the tool ID for individually identifying each tool (Tp, Td) by a tool layout setting unit (203);
displaying, by a display (51) controlled by a display controller (202), information indicating a place where the pair of tools (Tp, Td) are housed in the tool stocker (40) based on the housing place information included in the tool layout data;
collating a read tool ID with a tool ID of the pair of tools included in the tool layout data and determining whether the read tool ID matches the tool ID of either one of the pair of tools when an operator refers to information indicating a housing place displayed on the display (51) to retrieve a tool from the tool stocker and a reader reads a tool ID of the retrieved tool,
displaying, by the display (51) controlled by the display controller (202), a first message indicating that the tool retrieved by the operator is a correct tool in a case where it is determined that the read tool ID matches the tool ID of either one of the pair of tools (Tp, Td),
displaying, by the display (51) controlled by the display controller (202), a second message indicating that the tool retrieved by the operator is an incorrect tool in a case where it is determined that the read tool ID matches a tool ID of none of the pair of tools (Tp, Td),
**characterized in that**
in a case where it is determined that the tool (Tp, Td) of the read tool ID and any punch (Tp) or any die (Td) are the same tools (Tp, Td) although IDs thereof are different, displaying, by the display (51) controlled by the display controller (202) a message indicating that the tools (Tp, Td) are the same although IDs thereof are different, and
if an operator instructs use of the punch (Tp) or the die (Td) with the read tool ID, replacing the tool ID and the housing place information of the punch (Tp) or the die (Td) of the same tool (Tp, Td) of the punch (Tp) or the die (Td) with the read tool ID included in the punch (Tp) or the die (Td) in the tool layout data with the tool ID and the housing place information of the punch (Tp) or the die (Td) with the read tool ID.

## Patentansprüche

1. Steuervorrichtung (20) für eine Abkantpresse, umfassend:
**(a)** eine Werkzeuglayout-Einstelleinheit (203), die konfiguriert ist,
• um auf Werkzeugverwaltungsdaten zuzugreifen,
• ein Paar von Werkzeugen (Tp, Td) auszuwählen, die Stempel und Matrizen umfassen, die an mindestens einer Position in einer horizontalen Richtung eines oberen Tisches (11) und eines unteren Tisches (12) einer Abkantpresse (10) angebracht sind, die Werkzeuge (Tp, Td) sind, die zum Biegen eines zu bearbeitenden Blechs verwendet werden,
• um Positionen einzustellen, in denen das Paar von Werkzeugen (Tp, Td) an dem oberen Tisch (11) und dem unteren Tisch (12) in der horizontalen Richtung in einer ausgerichteten Weise angebracht sind, und
• zum Erzeugen von Werkzeug-Layoutdaten, die Folgendes umfassen
- eine Werkzeug-ID für jedes Werkzeug (Tp, Td) des Paars von Werkzeugen (Tp, Td), die an jeder Position montiert sind,
- Montagepositionsinformationen, die einen Ort angeben, an dem jedes Werkzeug (Tp, Td) an dem oberen Tisch (11) oder dem unteren Tisch (12) montiert ist, und
- Unterbringungsortinformationen für jedes Werkzeugs (Tp, Td) in einem Werkzeuglager (40), das das Paar von Werkzeugen (Tp, Td) mit der Werkzeug-ID zum individuellen Identifizieren jedes Werkzeugs (Tp, Td) aufnimmt; und
**(b)** eine Anzeigesteuerung (202), die so konfiguriert ist, dass sie eine Anzeige (51) so steuert, dass sie Informationen anzeigt, die einen Ort angeben, an dem das Paar von Werkzeugen (Tp, Td) in dem Werkzeuglager (40) untergebracht ist, und zwar auf der Grundlage der in den Werkzeuglayoutdaten enthaltenen Unterbringungsortinformationen;
**(c)** eine Werkzeug-Vergleichseinheit, die so konfiguriert ist, dass sie eine gelesene Werkzeug-ID mit einer Werkzeug-ID des Paares von Werkzeugen (Tp, Td), die in den Werkzeug-Layoutdaten enthalten sind, vergleicht und bestimmt, ob die gelesene Werkzeug-ID mit der Werkzeug-ID eines der beiden Werkzeuge (Tp, Td) übereinstimmt, wenn ein Bediener auf Informationen Bezug nimmt, die einen Unterbringungsort angeben, der auf der Anzeige angezeigt wird, um ein Werkzeug aus dem Werkzeuglager (40) zu entnehmen, und ein Leser eine Werkzeug-ID des entnommenen Werkzeugs liest, wobei
die Werkzeugverwaltungsdaten, die durch Verknüpfen der Werkzeug-ID jedes Werkzeugs (Tp, Td) mit Werkzeuginformationen über einen Typ und eine Breite jedes Werkzeugs (Tp, Td) und die Unterbringungsortinformationen, die den Ort angeben, an dem jedes Werkzeug (Tp, Td) in dem Werkzeuglager (40) untergebracht ist, erhalten werden, in einem Werkzeugverwaltungsserver (30) gespeichert werden, und
die Anzeigesteuerung (202) ferner konfiguriert ist, um:
• die Anzeige so zu steuern, dass sie eine erste Meldung anzeigt, die angibt, dass das vom Bediener entnommene Werkzeug ein korrektes Werkzeug ist, wenn die Werkzeug-Vergleichseinheit feststellt, dass die gelesene Werkzeug-ID mit der Werkzeug-ID eines der beiden Werkzeuge übereinstimmt, und
• die Anzeige so zu steuern, dass sie eine zweite Meldung anzeigt, die angibt, dass das vom Bediener entnommene Werkzeug ein falsches Werkzeug ist, wenn die Werkzeug-Vergleichseinheit feststellt, dass die gelesene Werkzeug-ID mit einer Werkzeug-ID von keinem der beiden Werkzeuge (Tp, Td) übereinstimmt,
**dadurch gekennzeichnet, dass**
die Anzeigesteuerung (202) ferner so konfiguriert ist, dass sie in einem Fall, in dem die Werkzeug-Vergleichseinheit (208) feststellt, dass das Werkzeug (Tp, Td) der gelesenen Werkzeug-ID und ein beliebiger Stempel (Tp) oder eine beliebige Matrize (Td) dieselben Werkzeuge (Tp, Td) sind, obwohl ihre IDs unterschiedlich sind, der Anzeigesteuerung (202) ermöglicht, die Anzeige (51) so zu steuern, dass sie eine dritte Meldung anzeigt, die angibt, dass die Werkzeuge (Tp, Td) dieselben sind, obwohl ihre IDs unterschiedlich sind, und
die Abkantpressen-Steuervorrichtung (20) ferner so konfiguriert ist, dass sie, wenn ein Bediener die Verwendung des Stempels (Tp) oder der Matrize (Td) mit der gelesenen Werkzeug-ID anweist, es der Werkzeug-Layout-Einstelleinheit (203) ermöglicht, die Werkzeug-ID und die Gehäuseplatzinformation des Stempels (Tp) oder der Matrize (Td) desselben Werkzeugs (Tp, Td) des Stempels (Tp) oder der Matrize (Td) mit der gelesenen Werkzeug-ID, die in dem Stempel (Tp) oder der Matrize (Td) in den Werkzeuglayoutdaten enthalten ist, durch die Werkzeug-ID und die Gehäuseplatzinformation des Stempels (Tp) oder der Matrize (Td) mit der gelesenen Werkzeug-ID zu ersetzen.

2. Verfahren zur Steuerung einer Abkantpresse, umfassend:
Unterbringen eines Paares von Werkzeugen (Tp, Td) mit Stempeln und Matrizen, die eine Werkzeug-ID zur individuellen Identifizierung jedes Werkzeugs (Tp, Td) aufweisen, in einem Werkzeuglager (40);
Speichern von Werkzeugverwaltungsdaten in einem Werkzeugverwaltungsserver (30), die durch Verknüpfen der Werkzeug-ID jedes Werkzeugs (Tp, Td) mit Werkzeuginformationen über einen Typ und eine Breite jedes Werkzeugs (Tp, Td) und Unterbringungsortinformationen, die den Ort angeben, an dem jedes Werkzeug (Tp, Td) in dem Werkzeuglager (40) untergebracht ist, erhalten werden;
unter Bezugnahme auf die Werkzeugverwaltungsdaten, Auswählen des Paares von Werkzeugen (Tp, Td), die an mindestens einer Position in einer horizontalen Richtung eines oberen Tisches (11) und eines unteren Tisches (12) einer Abkantpresse (10) angebracht sind, die Werkzeuge (Tp, Td) sind, die zum Biegen eines zu bearbeitenden Blechs verwendet werden,
Einstellen von Positionen, in denen das Paar von Werkzeugen (Tp, Td) an dem oberen Tisch (11) und dem unteren Tisch (12) in der horizontalen Richtung in einer ausgerichteten Weise angebracht sind, und
Erzeugen von Werkzeuglayoutdaten, die die Werkzeug-ID jedes Werkzeugs (Tp, Td) des Paars von Werkzeugen (Tp, Td), die an jeder Position angebracht sind, Montagepositionsinformationen, die eine Position anzeigen, in der jedes Werkzeug (Tp, Td) an dem oberen Tisch (11) oder dem unteren Tisch (12) angebracht ist, und die Aufnahmeplatzinformation jedes Werkzeugs (Tp, Td) in dem Werkzeuglager (40), das das Paar von Werkzeugen (Tp, Td) aufnimmt, enthalten, um die Werkzeug-ID zum individuellen Identifizieren jedes Werkzeugs (Tp, Td) durch eine Werkzeuglayout-Einstelleinheit (203) zu identifizieren;
Anzeigen, durch eine Anzeige (51), die durch eine Anzeigesteuerung (202) gesteuert wird, von Informationen, die einen Ort angeben, an dem das Paar von Werkzeugen (Tp, Td) in dem Werkzeuglager (40) untergebracht ist, basierend auf den Unterbringungsortinformationen, die in den Werkzeuglayoutdaten enthalten sind;
Vergleichen einer gelesenen Werkzeug-ID mit einer Werkzeug-ID des Paares von Werkzeugen, die in den Werkzeug-Layoutdaten enthalten sind, und Bestimmen, ob die gelesene Werkzeug-ID mit der Werkzeug-ID von einem des Paares von Werkzeugen übereinstimmt, wenn ein Bediener auf Informationen Bezug nimmt, die einen Unterbringungsort anzeigen, der auf der Anzeige (51) angezeigt wird, um ein Werkzeug aus dem Werkzeuglager zu entnehmen, und ein Leser eine Werkzeug-ID des entnommenen Werkzeugs liest,
Anzeigen, durch die von der Anzeigesteuerung (202) gesteuerte Anzeige (51), einer ersten Meldung, die anzeigt, dass das von dem Bediener entnommene Werkzeug ein korrektes Werkzeug ist, wenn festgestellt wird, dass die gelesene Werkzeug-ID mit der Werkzeug-ID eines der beiden Werkzeuge (Tp, Td) übereinstimmt,
Anzeigen einer zweiten Meldung durch die von der Anzeigesteuerung (202) gesteuerte Anzeige (51), die anzeigt, dass das von der Bedienungsperson entnommene Werkzeug ein falsches Werkzeug ist, wenn festgestellt wird, dass die gelesene Werkzeug-ID mit einer Werkzeug-ID von keinem der beiden Werkzeuge (Tp, Td) übereinstimmt,
**dadurch gekennzeichnet, dass**
in einem Fall, in dem festgestellt wird, dass das Werkzeug (Tp, Td) der gelesenen Werkzeug-ID und ein beliebiger Stempel (Tp) oder eine beliebige Matrize (Td) die gleichen Werkzeuge (Tp, Td) sind, obwohl ihre IDs unterschiedlich sind, durch die von der Anzeigesteuerung (202) gesteuerte Anzeige (51) eine Meldung angezeigt wird, die angibt, dass die Werkzeuge (Tp, Td) die gleichen sind, obwohl ihre IDs unterschiedlich sind, und
wenn ein Bediener die Verwendung des Stempels (Tp) oder der Matrize (Td) mit der gelesenen Werkzeug-ID anweist, Ersetzen der Werkzeug-ID und der Gehäuseplatzinformation des Stempels (Tp) oder der Matrize (Td) desselben Werkzeugs (Tp, Td) des Stempels (Tp) oder der Matrize (Td) mit der gelesenen Werkzeug-ID, die in dem Stempel (Tp) oder der Matrize (Td) in den Werkzeug-Layoutdaten enthalten ist, mit der Werkzeug-ID und der Gehäuseplatzinformation des Stempels (Tp) oder der Matrize (Td) mit der gelesenen Werkzeug-ID.

## Revendications

1. Dispositif de commande d'une presse plieuse (20) comprenant :
(a) une unité de réglage de la disposition des outils (203) configurée,
• pour se référer aux données de gestion des outils,
• pour sélectionner une paire d'outils (Tp, Td) incluant des poinçons et des matrices montés sur au moins une position dans une direction horizontale d'une table supérieure (11) et d'une table inférieure (12) d'une presse plieuse (10) qui sont des outils (Tp, Td) utilisés pour plier une feuille de métal à traiter,
• pour définir les positions dans lesquelles la paire d'outils (Tp, Td) est montée sur la table supérieure (11) et la table inférieure (12) dans la direction horizontale de manière à s'aligner, et
• pour générer des données sur la disposition des outils qui incluent
- un identifiant d'outil de chaque outil (Tp, Td) de la paire d'outils (Tp, Td) monté sur chaque position,
- des informations de position de montage indiquant l'endroit où chaque outil (Tp, Td) est monté sur la table supérieure (11) ou la table inférieure (12), et
- des informations relatives à l'emplacement de logement de chaque outil (Tp, Td) dans un stockeur d'outils (40) qui abrite la paire d'outils (Tp, Td) avec l'identifiant d'outil pour identifier individuellement chaque outil (Tp, Td) ; et
(b) un contrôleur d'affichage (202) configuré pour commander un affichage (51) afin d'afficher des informations indiquant l'endroit où la paire d'outils (Tp, Td) est logée dans le stockeur d'outils (40) sur la base des informations relatives à l'emplacement de logement incluses dans les données sur la disposition des outils ;
(c) une unité de collationnement des outils configurée pour collationner un identifiant d'outil lu avec un identifiant d'outil de la paire d'outils (Tp, Td) inclus dans les données sur la disposition des outils et déterminer si l'identifiant d'outil lu correspond à l'identifiant d'outil de l'un ou l'autre de la paire d'outils (Tp, Td) lorsqu'un opérateur se réfère aux informations indiquant un emplacement de stockage affichées sur l'affichage pour récupérer un outil dans le stockeur d'outils (40) et qu'un lecteur lit un identifiant d'outil récupéré, dans lequel
les données de gestion des outils obtenues en associant l'identifiant d'outil de chaque outil (Tp, Td) aux informations sur le type et la largeur de chaque outil (Tp, Td) et aux informations relatives à l'emplacement de logement indiquant l'endroit où chaque outil (Tp, Td) est logé dans le stockeur d'outils (40) sont stockées dans un serveur de gestion des outils (30),
le contrôleur d'affichage (202) est en outre configuré pour :
• commander l'affichage d'un premier message indiquant que l'outil récupéré par l'opérateur est un outil correct dans le cas où l'unité de collationnement des outils détermine que l'identifiant d'outil lu correspond à l'identifiant d'outil de l'un ou l'autre de la paire d'outils, et
• commander l'affichage d'un deuxième message indiquant que l'outil récupéré par l'opérateur est un outil incorrect dans le cas où l'unité de collationnement des outils détermine que l'identifiant d'outil lu ne correspond à aucun identifiant d'outil de la paire d'outils (Tp, Td),
**caractérisé en ce que**
le contrôleur d'affichage (202) est en outre configuré, dans le cas où l'unité de regroupement d'outils (208) détermine que l'outil (Tp, Td) de l'identifiant d'outil lu et tout poinçon (Tp) ou toute matrice (Td) sont les mêmes outils (Tp, Td) bien que leurs identifiants soient différents, pour permettre au contrôleur d'affichage (202) de commander l'affichage (51) afin d'afficher un troisième message indiquant que les outils (Tp, Td) sont les mêmes bien que leurs identifiants soient différents, et
le dispositif de commande de la presse plieuse (20) est en outre configuré, si un opérateur ordonne l'utilisation du poinçon (Tp) ou de la matrice (Td) avec l'identifiant d'outil lu, pour permettre à l'unité de réglage de la disposition des outils (203) de remplacer l'identifiant d'outil et les informations relatives à l'emplacement de logement du poinçon (Tp) ou de la matrice (Td) du même outil (Tp, Td) du poinçon (Tp) ou de la matrice (Td) avec l'identifiant d'outil lu inclus dans le poinçon (Tp) ou la matrice (Td) dans les données sur la disposition des outils avec l'identifiant d'outil et les informations relatives à l'emplacement de logement du poinçon (Tp) ou de la matrice (Td) avec l'identifiant d'outil lu.

2. Procédé de commande d'une presse plieuse comprenant les étapes consistant à :
loger, dans un stockeur d'outils (40), une paire d'outils (Tp, Td) incluant des poinçons et des matrices ayant un identifiant d'outil permettant d'identifier individuellement chaque outil (Tp, Td) ;
stocker, dans un serveur de gestion des outils (30), des données de gestion des outils obtenues en associant l'identifiant d'outil de chaque outil (Tp, Td) à des informations sur le type et la largeur de chaque outil (Tp, Td) et des informations relatives à l'emplacement de logement indiquant l'endroit où chaque outil (Tp, Td) est logé dans le stockeur d'outils (40) ;
en se référant aux données de gestion des outils, sélectionner la paire d'outils (Tp, Td) montée sur au moins une position dans une direction horizontale d'une table supérieure (11) et d'une table inférieure (12) d'une presse plieuse (10) qui sont des outils (Tp, Td) utilisés pour plier une feuille de métal à traiter,
définir les positions dans lesquelles la paire d'outils (Tp, Td) est montée sur la table supérieure (11) et la table inférieure (12) dans la direction horizontale de manière à s'aligner, et
générer des données sur la disposition des outils qui incluent l'identifiant d'outil de chaque outil (Tp, Td) de la paire d'outils (Tp, Td) montée à chaque position, les informations de position de montage indiquant une position dans laquelle chaque outil (Tp, Td) est monté sur la table supérieure (11) ou sur la table inférieure (12), et les informations relatives à l'emplacement de logement de chaque outil (Tp, Td) dans le stockeur d'outils (40) qui loge la paire d'outils (Tp, Td) ayant l'identifiant d'outil pour identifier individuellement chaque outil (Tp, Td) par une unité de réglage de la disposition des outils (203) ;
afficher, par un affichage (51) commandé par un contrôleur d'affichage (202), des informations indiquant l'endroit où la paire d'outils (Tp, Td) est logée dans le stockeur d'outils (40) sur la base des informations relatives à l'emplacement de logement incluses dans les données sur la disposition des outils ;
collationner un identifiant d'outil lu avec un identifiant d'outil de la paire d'outils inclus dans les données sur la disposition des outils et déterminer si l'identifiant d'outil lu correspond à l'identifiant d'outil de l'un ou l'autre de la paire d'outils lorsqu'un opérateur se réfère aux informations indiquant un emplacement de stockage affichées sur l'affichage (51) pour récupérer un outil dans le stockeur d'outils et qu'un lecteur lit un identifiant d'outil récupéré,
afficher, par l'affichage (51) commandé par le contrôleur d'affichage (202), un premier message indiquant que l'outil récupéré par l'opérateur est un outil correct dans le cas où il est déterminé que l'identifiant d'outil lu correspond à l'identifiant d'outil de l'un ou l'autre de la paire d'outils (Tp, Td),
afficher, par l'affichage (51) commandé par le contrôleur d'affichage (202), un deuxième message indiquant que l'outil récupéré par l'opérateur est un outil incorrect dans le cas où il est déterminé que l'identifiant d'outil lu ne correspond à aucun identifiant d'outil de la paire d'outils (Tp, Td),
**caractérisé en ce que**
dans le cas où il est déterminé que l'outil (Tp, Td) de l'identifiant d'outil lu et tout poinçon (Tp) ou toute matrice (Td) sont les mêmes outils (Tp, Td) bien que leurs identifiants soient différents, afficher, par l'affichage (51) commandé par le contrôleur d'affichage (202), un message indiquant que les outils (Tp, Td) sont les mêmes bien que leurs identifiants soient différents, et
si un opérateur ordonne l'utilisation du poinçon (Tp) ou de la matrice (Td) avec l'identifiant d'outil lu, remplacer l'identifiant d'outil et les informations relatives à l'emplacement de logement du poinçon (Tp) ou de la matrice (Td) du même outil (Tp, Td) du poinçon (Tp) ou de la matrice (Td) avec l'identifiant d'outil lu inclus dans le poinçon (Tp) ou la matrice (Td) dans les données sur la disposition des outils avec l'identifiant d'outil et les informations relatives à l'emplacement de logement du poinçon (Tp) ou de la matrice (Td) avec l'identifiant d'outil lu.
